# EUROPEAN PATENT APPLICATION

(11) **EP 2 667 645 A1**
(43) Date of publication of application: **27.11.2013**
(21) Application number: 11858960.5
(22) Date of filing: 15.12.2011
(51) Int. Cl.: H04W 4/24

(54) **METHOD AND SYSTEM FOR HANDLING SERVICE**

(30) Priority: 15.02.2011 CN 201110038737
(71) Applicant: ZTE Corporation, Shenzhen, Guangdong 518057 (CN)
(72) Inventor: HOU, Zhirong, Shenzhen Guangdong 518057 (CN)
(74) Representative: Tischner, Oliver
(86) International application number: PCT/CN2011/084054
(87) International publication number: WO 2012/109939

(57) **Abstract**

The disclose discloses a method and a system for handling a service, which both may create a detail record list of subscriber consumption for a subscriber service, perform debiting in sequence when debiting, and record debiting detail information, and query debiting detail records of a current month and of a previous month when reimbursing to determine a reimbursement account number and a reimbursement amount. The method and the system of the disclosure avoid misuse of various resources caused by reimbursement by means of recording debiting and rollback details of a Short Message Service (SMS), an Enhanced Messaging Service (EMS) and a Multimedia Messaging Service (MMS) to determine accounts for debiting and reimbursement. On one hand, relative fairness between a subscriber and an operator is ensured during debiting and reimbursement of the SMS, EMS and MMS services. On the other hand, malicious use of SMS, EMS and MMS rollback loopholes to acquire illegal benefit is prevented to protect the interest of the operator. Thus, the method and the system possess great economic benefit and technological value.

## Description

### TECHNICAL FIELD

The disclosure relates to field of communications, and in particular to a method and a system for handling a service.

### BACKGROUND

As an emerging business service network in the mobile communication industry, an intelligent network system, which can provide various value-added services conveniently, flexibly, economically and effectively and provide more timely and more human-friendly services of higher quality for customers by integrating with a business system, a customer service center, a short message center and a banking system, is one of very great service growth points of telecommunication operators.

A Service Control Point (SCP), which is one of the most critical devices in the intelligent network system, realizes a required service logic processing program for an intelligent service and required data for the intelligent service, and takes charge of debiting for a value-added service including a Short Message Service (SMS), a Multimedia Messaging Service (MMS), an Enhanced Messaging Service (EMS) and other similar services of a subscriber and issuing a debiting bill.

Currently, a processing mode for sending a short message, a multimedia message or an enhanced message includes: when a subscriber sends the short message, the multimedia message or the enhanced message, charging is performed by an SCP without detecting effectiveness of a number of a called subscriber (a subscriber receiving the short message, the multimedia message, or the enhanced message); if the called number does not exist or if power-off time of the subscriber exceeds short message rollback time set by a short message center or multimedia message rollback time set by a multimedia message center, the short message center or the multimedia message center will initiate a rollback operation and send an short message, enhanced message or multimedia message reimbursement message, and the SCP performs a reimbursement operation.

If a capital account of the subscriber is debited when the subscriber sends the short message, the multimedia message or the enhanced message and the rollback is also performed on the capital account, there is no problem with such a mode. However, subscribers generally use packages at present. If the subscriber uses a certain package, the package will include a number of free short messages and/or a number of free multimedia messages and/or a number of free enhanced messages. At the same time, operators will generally present as a gift a certain number of gift short messages and/or a number of free multimedia messages and/or a number of free enhanced messages or an amount of money (applicable to short messages, enhanced messages or multimedia messages) by various ways, in order to encourage subscriber consumption or packaging sale services. The following method is generally applied during debiting:
(1) firstly, performing debiting on a package account with a number of free short messages, enhanced messages or multimedia messages, and ensuring that other accounts cannot be consumed before this account is used up;
(2) secondly, performing debiting on an account with a number of gift short messages, enhanced messages or multimedia messages of the subscriber;
(3) thirdly, performing debiting on a gift amount account of the subscriber; and
(4) finally, performing debiting on the capital account of the subscriber.

And rollback is performed according to the following sequence:
(1) when the short messages, the enhanced messages or the multimedia messages in the package account are not used up, rolling back to the package;
(2) when resources in the package account are used up and the account with a number of gift short messages, enhanced messages and multimedia messages are not used up, rolling back to the account with a number of gift short messages, enhanced messages and multimedia messages;
(3) when the resources of the package account are used up, the account with a number of gift short messages, enhanced messages and multimedia messages are used up and there is an amount of money in the gift amount account, rolling back to the gift amount account;
(4) when all the above accounts are used up, rolling back to the capital account.

The above package account and gift account may be applied to resources of the short messages, enhanced messages and multimedia messages, as well as debiting and rollback ways, but the following three problems are caused:
(1) The resources of the package account and the gift account of the subscriber are transferred to the capital account by mistake.
   If the subscriber sends the short messages, enhanced messages or multimedia messages to a non-existent or powered-off number continuously until the number of free messages in the package, the number of gift free messages, and the amount of gift money are used up; when these rollback messages arrive after a set rollback time of the short messages, the multimedia messages or the enhanced messages, originally-debited charge will be reimbursed to the capital account of the subscriber. Provided that the monthly payment of the package of the subscriber is 30 RMB per one month, there are 400 free short messages, 200 gift short messages, a gift amount of 10 RMB in the package, and each short message costs 0.1 RMB, then 70 RMB will be added to the capital amount when all the resources above are rolled back to the capital account, and thus the operator will lose 70-30=40 RMB without earnings, which is apparently intolerable for the operator.
(2) Time effectiveness of reimbursement The package and gift account resources above, which are time-effective, are generally effective in the current month and invalid in the next month, and the package and gift resources of the current month for the subscriber will be reset subsequently. Provided that package's and gift short message, enhanced message or multimedia message resources are used by the subscriber at the end of a month, then rollback will be performed in the next month. Thus, the resources of the pervious month are rolled back to the resources of the next month again and can continue to be used in the next month, which is also intolerable for the operator.
(3) Errors of rules for using the package and gift account resources

The gift amount account of the subscriber may be applied to various consumptions. After the subscriber uses the package account and the account with a number of gift short messages, enhanced messages or multimedia messages to send the short messages, rollback is performed on the gift amount account of the subscriber, and then the subscriber may use the gift amount for other consumptions, such as calling and a General Packet Radio Service (GPRS), which also violates the original intention of the operator.

It can be seen from the description above that there are loopholes in processing logic of debiting, rollback and other similar processing of value-added services including the SMS, MMS, EMS services and other services at present, various resources misuse may be caused easily due to reimbursement, and fairness between the subscriber and the operator cannot be ensured during debiting and reimbursement of the SMS, EMS, and MMS services. Huge losses of the operator will be caused once the loopholes are used maliciously.

### SUMMARY

In view of this, the main purpose of the disclosure is to provide a method and a system for handling a service, to avoid various resource misuse caused by reimbursement and ensure fairness between a subscriber and an operator during debiting and reimbursement of SMS, EMS, and MMS services.

In order to achieve the above purpose, the technical solution of the disclosure is implemented as follows.

A method for handling a service is provided, which includes creating a detail record list of subscriber consumption for a subscriber service, and further includes:
performing debiting in sequence when debiting, and recording debiting detail information; and
querying debiting detail records of a current month and of a previous month when reimbursing to determine a reimbursement account and a reimbursement amount.

Moreover, the subscriber service may be at least one of followings: an SMS, an EMS and an MMS.

Moreover, the process of creating the detail record list of the subscriber consumption may include:
for the SMS, the EMS and the MMS of a subscriber, creating following debiting records for the subscriber respectively: a debiting record of a capital account, a debiting record of a gift amount account, a debiting record of a gift number account and a debiting record of a package number account.

Moreover, the process of performing the debiting in sequence and recording the debiting detail information may include:
for the SMS, the EMS and the MMS of a subscriber, performing the debiting according to a sequence of package number, gift number, gift amount and capital; and accumulating debiting information of all accounts, and recording debiting records capable of reflecting accurate debiting time and debiting account information.

Moreover, the process of querying the debiting detail records of the current month and of the previous month to determine the reimbursement account and the reimbursement amount may include:
for the SMS, the EMS and the MMS of a subscriber, querying the debiting detail record in debiting records of the current month first, when the debiting detail record is not found, querying the debiting detail record in debiting records of the previous month; for debiting information of the previous month, only allowing reimbursement for capital debiting; when performing reimbursement on the debiting records of the current month, querying a debiting record of a capital account, a debiting record of a gift amount account, a debiting record of a gift number account, and a debiting record of a package number account of the subscriber to determine the reimbursement account and the reimbursement amount of the reimbursement account, and taking debiting amount or debiting number as an upper limit for the reimbursement amount of each account.

A system for handling a service includes a debiting unit and a reimbursement unit, wherein
the debiting unit is configured to create a detail record list of subscriber consumption for a subscriber service, perform debiting in sequence when debiting, and record debiting detail information; and
the reimbursement unit is configured to query debiting detail records of a current month and of a previous month when reimbursing to determine a reimbursement account number and a reimbursement amount.

Moreover, the subscriber service may be at least one of followings: an SMS, an EMS and an MMS.

Moreover, the debiting unit may include a subscriber debiting account determination module, a subscriber consumption detail recording module and a subscriber debiting execution module, wherein
the subscriber debiting account determination unit is configured to determine a specific debiting account according to resources of a subscriber and in combination with consumption detail records of the subscriber;
the subscriber consumption detail recording unit may be configured to implement recording of subscriber consumption details, provide data query for a subscriber reimbursement account determination module, and provide data records for the subscriber debiting execution module; and
the subscriber debiting execution module may be configured to receive the debiting account and amount information of the subscriber from the subscriber debiting account determination module, perform debiting and record a debiting result in the subscriber consumption detail recording module.

Moreover, the reimbursement unit may include a subscriber reimbursement account determination module and a reimbursement execution module, wherein the subscriber reimbursement account determination module may be configured to query the consumption detail records and resources of the subscriber, and determine and output reimbursement account information of the subscriber; and the reimbursement execution module may be configured to receive a reimbursement account and reimbursement amount information of a subscriber from the subscriber reimbursement account determination module, and execute a reimbursement operation.

Moreover, the resources may include various packages, gifts and capitals of the subscriber.

The method and the system of the disclosure avoid misuse of various resources caused by reimbursement by means of recording debiting and rollback details of the SMS, EMS and MMS to determine accounts for debiting and reimbursement. On one hand, relative fairness between the subscriber and the operator is ensured during debiting and reimbursement of the SMS, EMS, and MMS services. On the other hand, malicious use of SMS, EMS, and MMS rollback loopholes to acquire illegal benefit is prevented to protect the interest of the operator. Thus, the method and the system possess great economic benefit and technological value.

### BRIEF DESCRIPTION OF THE DRAWINGS

Fig. 1 is a flowchart for implementing a system according to an embodiment of the disclosure;
Fig. 2a to Fig. 2c are flowcharts of performing debiting on a short message according to embodiments of the disclosure;
Fig. 3a to Fig. 3c are flowcharts of performing reimbursement on a short message according to embodiments of the disclosure; and
Fig. 4 is a diagram illustrating system modules according to an embodiment of the disclosure.

### DETAILED DESCRIPTION

In an practical application, debiting and rollback details of the SMS, EMS, and MMS services may be recorded to determine accounts for debiting and reimbursement, thereby avoiding various resource misuse caused by reimbursement. Taking a short message for an example, a debiting record of a short message capital account, a debiting record of a short message gift amount account, a debiting record of a short message gift number account and a debiting record of a short message package number account are created for a subscriber. When debiting, debiting is performed according to the sequence of the number of short messages in the package, the number of gift short messages, the gift amount and the capital. When reimbursing, the debiting record of the capital account, the debiting record of the short message gift amount account, the debiting record of the short message gift number account and the debiting record of the short message package number account of the subscriber are queried to determine a reimbursement account, thereby preventing resource misuse of the accounts of the subscriber. Meanwhile, time effectiveness of reimbursement is determined when reimbursing through querying sending time of the short message, thereby preventing resources of the subscriber in the previous month from being transferred by mistake to the next month to continue to be used. An enhanced message and a multimedia message are handled in the same manner. In the method and system, on one hand, relative fairness between the subscriber and the operator is ensured during debiting and reimbursement of the SMS, EMS, and MMS services; on the other hand, malicious use of SMS, EMS, and MMS rollback loopholes to acquire illegal benefit is prevented to protect the interest of the operator. Thus, the method and the system possess great economic benefit and technological value.

The method and the system are illustrated through specific embodiments below.

### Embodiment 1: steps for implementing the system

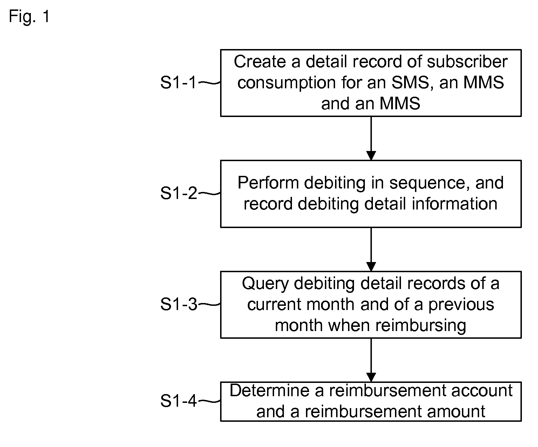

As shown in Fig. 1, the method of the disclosure is implemented by the following steps:
S1-1: A debiting record of a short message capital account, a debiting record of a short message gift amount account, a debiting record of a short message gift number account and a debiting record of a short message package number account are created for a subscriber respectively; a debiting record of an enhanced message capital account, a debiting record of an enhanced message gift amount account, a debiting record of an enhanced message gift number account and a debiting record of an enhanced message package number account are created; and a debiting record of a multimedia message capital account, a debiting record of a multimedia message gift amount account, a debiting record of a multimedia message gift number account and a debiting record of a multimedia message package number account are created.
S1-2: A method for performing debiting on the short message is described as follows: debiting is performed according to the sequence of the number of short messages in the package, the number of gift short messages, the gift amount and the capital; a method for performing debiting on the enhanced message is described as follows: debiting is performed according to the sequence of the number of enhanced messages in the package, the number of gift enhanced messages, the gift amount and the capital; and a method for performing debiting on the multimedia message is described as follows: debiting is performed according to the sequence of the number of multimedia messages in the package, the number of gift multimedia messages, the gift amount and the capital.

Meanwhile, debiting information of all accounts are accumulated in the accounts of S1.

Meanwhile, a debiting record of a single short message of the subscriber is recorded, and the debiting record reflects accurate debiting time and debiting account information.
S1-3: When reimbursing, a query is performed in debiting records of the current month according to a serial number, and if the query fails, another query is performed in debiting records of the previous month. For debiting information of the previous month, reimbursement is allowed only for capital debiting.
S1-4: When performing reimbursement on the debiting records of the current month, the debiting record of the capital account, the debiting record of the short message gift amount account, the debiting record of the short message gift number account and the debiting record of the short message package number account of the subscriber are queried to determine a reimbursement account and a reimbursement amount of the reimbursement account. The reimbursement amount of each account takes the debiting amount or the debiting number as an upper limit.

### Embodiment 2: record list of short message, enhance message and multimedia message debiting accounts of a subscriber

Further, the above S1-1 is described as follows.

These accounts created for the subscriber are used to record accumulated debiting amount or number of each account of the subscriber. When reimbursing, the reimbursement amount or number takes the accumulated debiting amount or number as an upper limit respectively.

As one of the embodiments, a table structure as shown in Table 1 may be preferably created for the subscriber in a database, and the table structure may be specifically expressed as a subscriber short message debiting record accumulation information table.

**Table 1**

| Subscriber number | Accumulated debiting value of the short message package number account (unit: piece) | Accumulated debiting value of the short message gift number account (unit: piece) | Accumulated debiting value of the gift amount account (unit: cent) | Accumulated debiting value of the capital amount account (unit: cent) | Debiting time |
|---|---|---|---|---|---|
| 8613905190600 | 20 | 30 | 350 | 650 | 2010.05 |
| 8613905150000 | 15 | 0 | 0 | 0 | 2010.06 |
| 8613905161110 | 20 | 30 | 0 | 0 | 2010.06 |

As shown in Table 1, the first record represents that the number of short messages in a package consumed by a subscriber 8613905190600 in May, 2010 is 20, the number of gift short messages consumed is 30, the consumed gift amount is 350 cents and the consumed capital amount is 650 cents.

The corresponding deducted number or amount information is accumulated to a corresponding field in each debiting. For example, it is June, 2010 at present, and 10 cents are debited from the gift account this time, then 10 cents is added to the field of the accumulated debiting value of the gift amount account of the subscriber correspondingly.

Table structures similar as that described above may be also applied to an enhanced message or a multimedia message.

Further, in the above S1-2, debiting records of single short messages of the subscriber are as described in Table 2 (a debiting record table of single short messages of the subscriber):

| Subscriber number | Short message serial number | Debiting account | Debiting amount or number | Debiting time |
|---|---|---|---|---|
| 8613905190600 | 111111110 | 1 | 1 (piece) | 20100606180822 |

**Table 2**

| | | | | |
|---|---|---|---|---|
| 8613905150000 | 222222220 | 2 | 1 (piece) | 20100606180823 |
| 8613905161110 | 333333330 | 3 | 10 (cents) | 20100606180828 |
| 8613905161120 | 666666666 | 4 | 10 (cents) | 20100606180838 |

As shown in Table 2, fields of the debiting accounts have the following meanings:
1: short message package number account;
2: short message gift number account;
3: account with a gift amount; and
4: capital account.

### Embodiment 3: debiting process for a short message subscriber

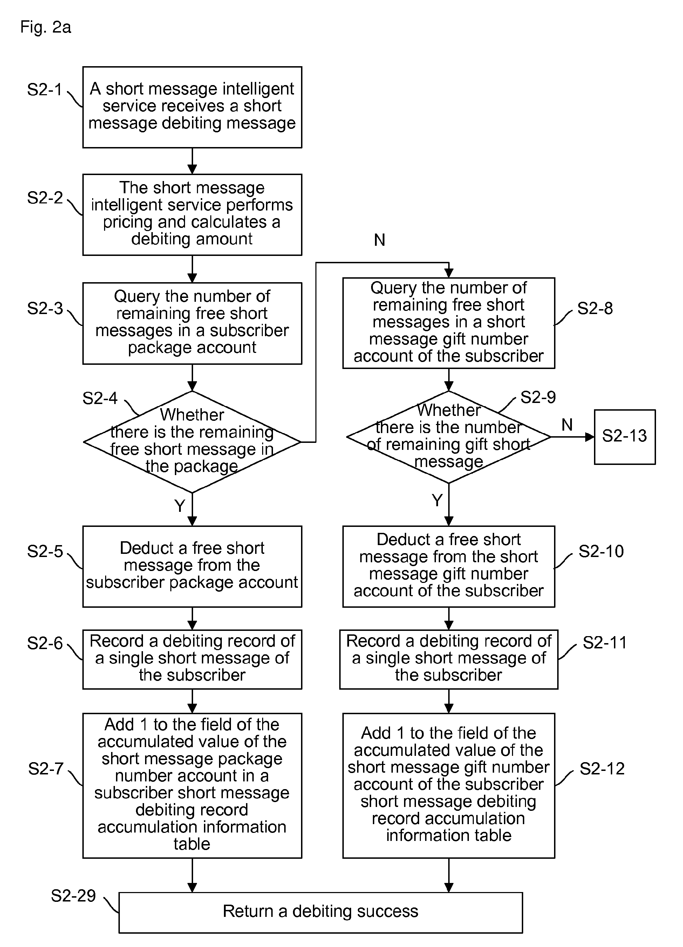

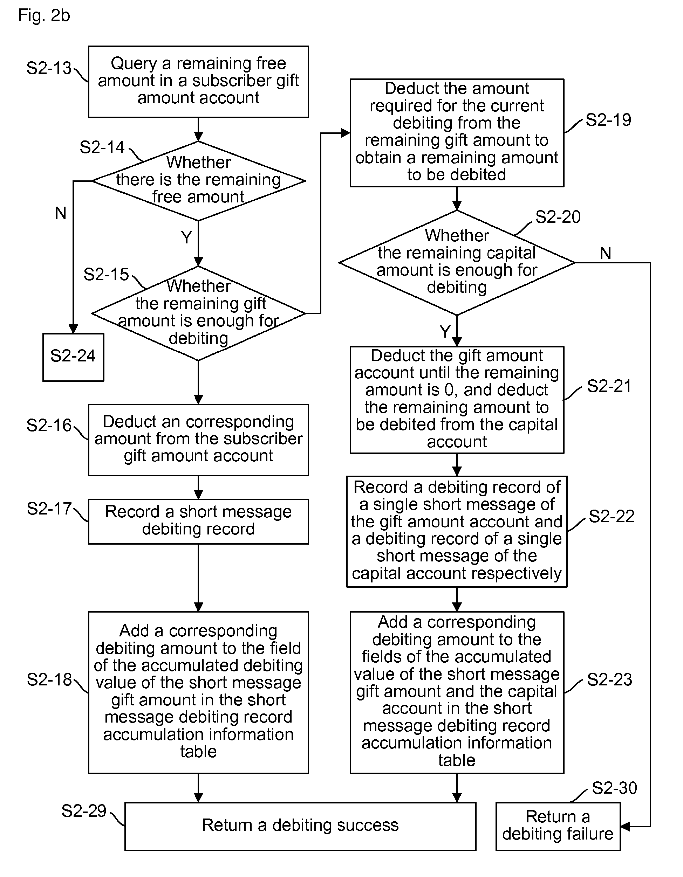

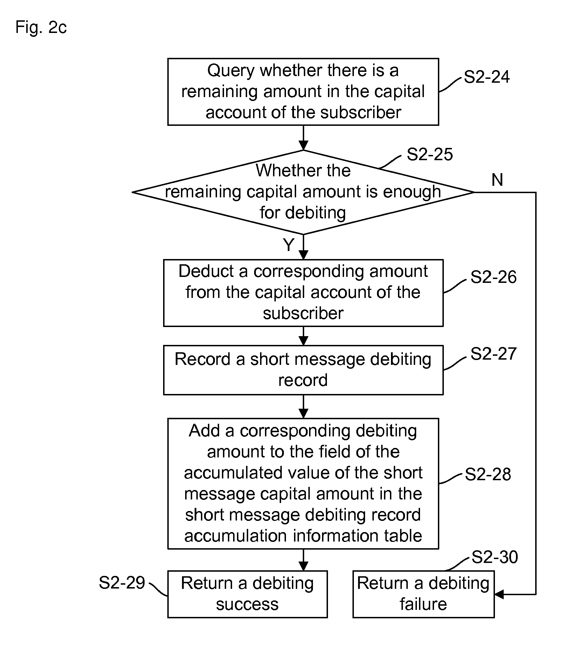

A short message debiting process of the disclosure is as shown in Fig. 2, which specifically includes the following steps:
S2-1: a short message intelligent service receives a short message debiting message;
S2-2: the short message intelligent service performs pricing on the debiting message and calculates a debiting amount;
S2-3: the intelligent service queries the number of remaining free short messages in a subscriber package account;
S2-4: it is determined whether there is the remaining short message in the package; if yes, S2-5 is executed; otherwise, S2-8 is executed;
S2-5: a free short message of the package of the subscriber is deducted from a short message package number account of the subscriber;
S2-6: a debiting record of a single short message of the subscriber is recorded, and the recording needs to reflect a short message serial number and reflect that a short message debiting account is the short message package number account;
S2-7: 1 is added to the field of the accumulated debiting value of the short message package number account in subscriber short message debiting record accumulation information, and S2-29 is executed;
S2-8: the intelligent service queries the number of remaining free short messages in a short message gift number account of the subscriber;
S2-9: it is determined whether there is the remaining gift short message; if yes, S2-10 is executed; otherwise, S2-11 is executed;
S2-10: a free short message is deducted from the short message gift number account of the subscriber;
S2-11: a debiting record of a single short message of the subscriber is recorded, and the recording needs to reflect a short message serial number and reflect that a short message debiting account is the short message gift number account;
S2-12: 1 is added to the field of the accumulated debiting value of the short message gift number account in a subscriber short message debiting record accumulation information table, and S2-29 is executed;
S2-13: a remaining free amount in a subscriber gift amount account is queried;
S2-14: it is determined whether there is the remaining free amount in the subscriber gift amount account; if yes, S2-15 is executed; otherwise, S2-24 is executed;
S2-15: it is determined whether there is an amount enough for the current debiting in the subscriber gift amount account; if yes, S2-16 is executed; otherwise, S2-19 is executed;
S2-16: the debiting amount of the current short message is deducted from the subscriber gift amount account;
S2-17: a short message debiting record is recorded, and the recording needs to reflect a short message serial number and reflect that a short message debiting account is the subscriber gift amount account;
S2-18: the corresponding debiting amount is added to the field of the accumulated debiting value of the short message gift amount in the short message debiting record accumulation information table, and S2-29 is executed;
S2-19: the amount required for the current debiting deducts the remaining gift amount of the subscriber to obtain a remaining amount to be debited;
S2-20: it is determined whether the remaining amount to be debited in S2-19 is smaller than or equal to a capital amount of the subscriber. In other words, it is determined whether the capital amount of the subscriber is enough for debiting the remaining amount to be debited of the subscriber; if yes, S2-21 is executed; otherwise, S2-30 is executed;
S2-21: the gift amount account is debited until the remaining amount is 0, and the remaining amount to be debited is deducted from the capital account;
S2-22: a debiting record of a single short message of the gift amount account and a debiting record of a single short message of the capital account are recorded respectively, and the recordings need to reflect short message serial numbers, the debiting amount of the gift amount account and the debiting amount of the capital account;
S2-23: the corresponding debiting amount are added to the fields of the accumulated values of the short message gift debiting amount and the capital account debiting amount in the short message debiting record accumulation information table respectively, and S2-29 is executed;
S2-24: a remaining amount in the capital account of the subscriber is queried;
S2-25: it is determined whether the remaining amount in the capital account of the subscriber is enough for debiting a debiting amount for the current short message; if yes,
S2-26 is executed; otherwise, S2-30 is executed; S2-26: the corresponding amount is deducted from the capital account of the subscriber;
S2-27: a short message debiting record is recorded, and the recording needs to reflect a short message serial number and reflect that a short message debiting account is the capital account of the subscriber;
S2-28: the corresponding debiting amount is added to the field of the accumulated value of the short message capital debiting amount in the short message debiting record accumulation information table, and S2-29 is executed;
S2-29: a debiting success is returned; and
S2-30: a debiting failure is returned.

By performing the debiting process according to the above steps, it can be ensured that, for a subscriber, the short message charges of the subscriber are deducted strictly according to the sequence of the number of short messages in a package, the number of gift short messages, the amount for gift short messages and the capital amount, thus ensuring fairness for the subscriber.

### Embodiment 4: rollback reimbursement process for a short message subscriber

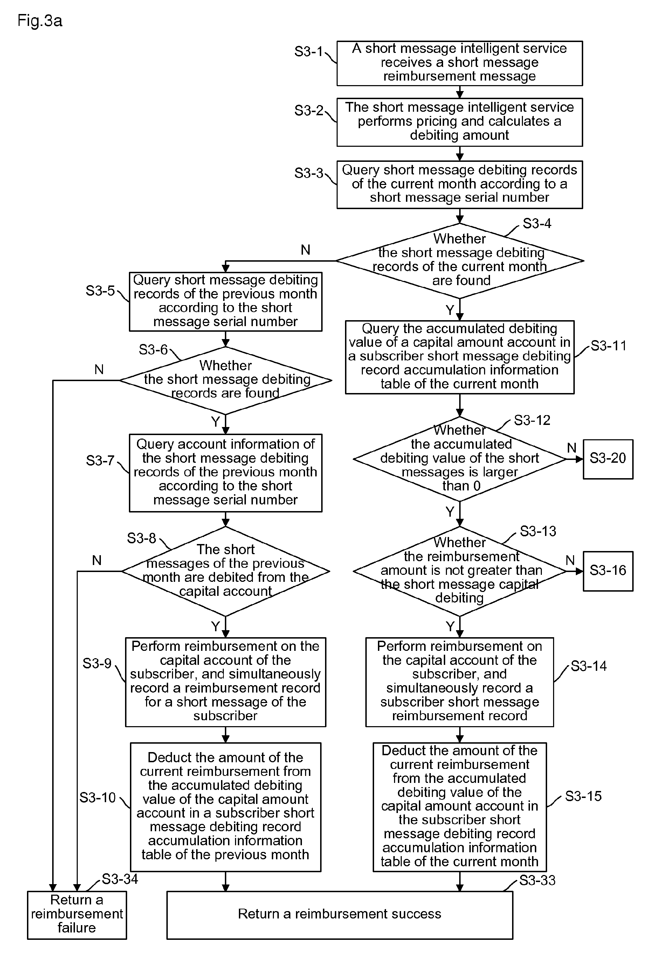

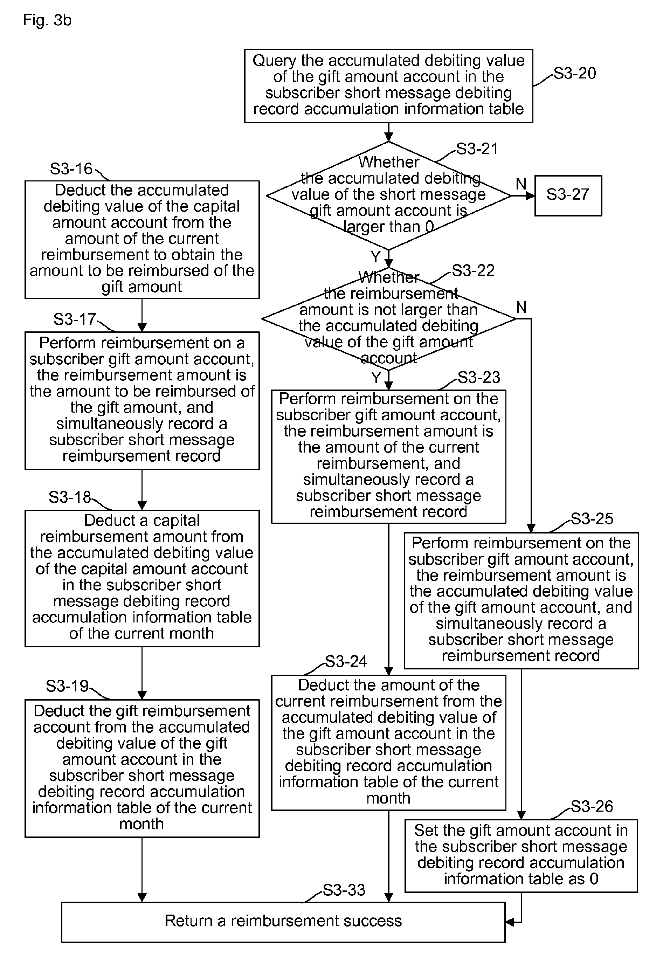

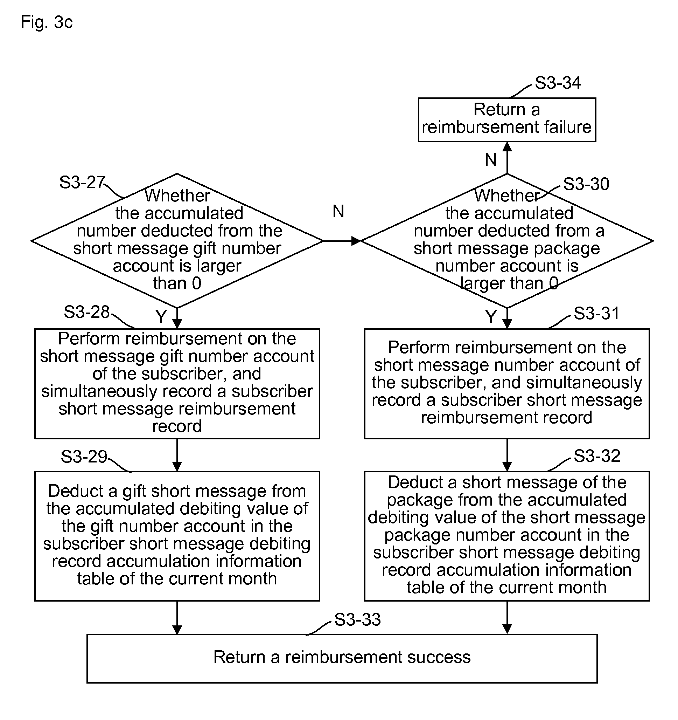

A short message rollback reimbursement process of the disclosure is as shown in Fig. 3, which specifically includes the following steps:
S3-1: a short message intelligent service receives a short message reimbursement message;
S3-2: the short message intelligent service performs pricing for the reimbursement message and calculates a debiting amount;
S3-3: the intelligent service queries short message debiting records of the current month of the subscriber according to a short message serial number;
S3-4: it is determined whether the short message debiting records of the current month can be found; if yes, S3-11 is executed; otherwise, S3-5 is executed;
S3-5: the intelligent service queries short message debiting records of the previous month of the subscriber according to the short message serial number;
S3-6: it is determined whether the debiting records can be found; if yes, S3-7 is executed; otherwise, S3-34 is executed;
S3-7: the intelligent service queries account information of short message debiting of the previous month of the subscriber according to the short message serial number;
S3-8: it is determined whether the short message is debited from a capital amount; if yes, S3-9 is executed; otherwise, S3-34;
S3-9: reimbursement is performed on the capital account of the subscriber, and simultaneously, a reimbursement record for a single short message of the subscriber is recorded, and an identified reimbursement account is recorded as the capital account;
S3-10: the amount of the current reimbursement is deducted from the accumulated debiting value of the capital amount account of a subscriber short message debiting record accumulation information table of the previous month, and perform S3-33;
S3-11: the accumulated debiting value of the capital amount account in a subscriber short message debiting record accumulation information table of the current month is queried;
S3-12: it is determined whether the accumulated debiting value of the capital amount account in the subscriber short message debiting record accumulation information table of the current month is larger than 0; if yes, S3-13 is executed; otherwise, S3-20 is executed;
S3-13: it is determined whether the accumulated debiting value of the capital amount account in the subscriber short message debiting record accumulation information table of the current month is enough for the amount of the current reimbursement; if yes, S3-14 is executed; otherwise, S3-16 is executed;
S3-14: reimbursement is performed on the capital account of the subscriber, and simultaneously, a subscriber short message reimbursement record is recorded, and a reimbursement account identified by the reimbursement record is the capital account;
S3-15: the amount of the current reimbursement is deducted from the accumulated debiting value of the capital amount account in the subscriber short message debiting record accumulation information table of the current month, and S3-33 is executed;
S3-16: the amount of the current reimbursement of the subscriber deducts the accumulated debiting value of the capital amount account to obtain the amount to be reimbursed of the gift amount;
S3-17: reimbursement is performed on a subscriber gift amount account, the reimbursement amount is the amount to be reimbursed of the gift amount, and simultaneously, a subscriber short message reimbursement record is recorded, and a reimbursement account identified by the reimbursement record is the gift amount account;
S3-18: a capital reimbursement amount is deducted from the accumulated debiting value of the capital amount account in the subscriber short message debiting record accumulation information table of the current month;
S3-19: the gift reimbursement account is deducted from the accumulated debiting value of the gift amount account in the subscriber short message debiting record accumulation information table of the current month, and S3-33 is executed;
S3-20: an accumulated debiting value of the gift amount account in the subscriber short message debiting record accumulation information table is queried;
S3-21: it is determined whether the accumulated debiting value of the short message gift amount account is larger than 0; if yes, S3-22 is executed; otherwise, S3-27 is executed;
S3-22: it is determined whether the reimbursement amount is smaller than or equal to the accumulated debiting value of the gift amount account; if yes, S3-23 is executed; otherwise, S3-25 is executed;
S3-23: reimbursement is performed on the subscriber gift amount account, the reimbursement amount is the amount of the current reimbursement, and simultaneously, a subscriber short message reimbursement record is recorded, and a reimbursement account identified by the reimbursement record is the gift amount account;
S3-24: the amount of the current reimbursement is deducted from the accumulated debiting value of the gift amount account in the subscriber short message debiting record accumulation information table of the current month, and S3-33 is executed;
S3-25: reimbursement is performed on the subscriber gift amount account, the reimbursement amount is the accumulated debiting value of the gift amount account, and simultaneously, a subscriber short message reimbursement record is recorded, and a reimbursement account identified by the reimbursement record is the gift amount account;
S3-26: the gift amount account in the subscriber short message debiting record accumulation information table is set as 0, and S3-33 is executed;
S3-27: it is determined whether the accumulated debiting value of a short message gift number account in the subscriber short message debiting record accumulation information table of the current month is larger than 0; if yes, S3-28 is executed; otherwise, S3-30 is executed;
S3-28: reimbursement is performed on the short message gift number account of the subscriber, and simultaneously, a subscriber short message reimbursement record is recorded, and a reimbursement account identified by the reimbursement record is the short message gift number account;
S3-29: a gift short message is deducted from the accumulated debiting value of the gift number account in the subscriber short message debiting record accumulation information table of the current month, and S3-33 is executed;
S3-30: it is determined whether the accumulated debiting value of a short message package number account in the subscriber short message debiting record accumulation information table of the current month is larger than 0; if yes, S3-31 is executed; otherwise, S3-34 is executed;
S3-31: reimbursement is performed on the short message number account of the subscriber, simultaneously, a subscriber short message reimbursement record is recorded, and a reimbursement account identified by the reimbursement record is the short message package number account;
S3-32: a short message of the package is deducted from the accumulated debiting value of the short message package account in the subscriber short message debiting record accumulation information table of the current month, and S3-33 is executed;
S3-33: a reimbursement success is returned; and
S3-34: a reimbursement failure is returned.

The three problems in reimbursement of the prior art can be well solved by performing the reimbursement process according to the above steps.

In combination with the short message debiting process and by recording and querying short message debiting record time and debiting accounts of two months, S3-3 to S3-10 solve the problem that resources of the previous month are transferred to the next month during short message reimbursement, also solve the problem that only capital can be reimbursed for short message debiting resources of the previous month, and further solve the problem that an capital reimbursement amount exceeds the actual debiting amount during reimbursement.
S3-11 to S3-19 solve the problem that a capital account reimbursement amount exceeds the actual capital account debiting amount during short message reimbursement of the current month, i.e., the problem of error transfer of a resource account.
S3-20 to S3-26 solve the problem that a reimbursement amount of a gift amount account exceeds the actual debiting amount of the gift account during short message reimbursement of the current month, i.e., the problem of error transfer of a resource account and the problem that an range of application of gift resources is changed.

According to the above method, time effectiveness of packages and gift resources of a subscriber during reimbursement can be ensured strictly, and it can be ensured that a reimbursement amount of each account does not exceed a debiting amount of the account, and that ranges of application of the package and gift resources of the subscriber will not be changed randomly.

In addition, debiting and reimbursement of a multimedia message and an enhanced message may be also processed according to the above flow.

### Embodiment 5: diagram of system modules

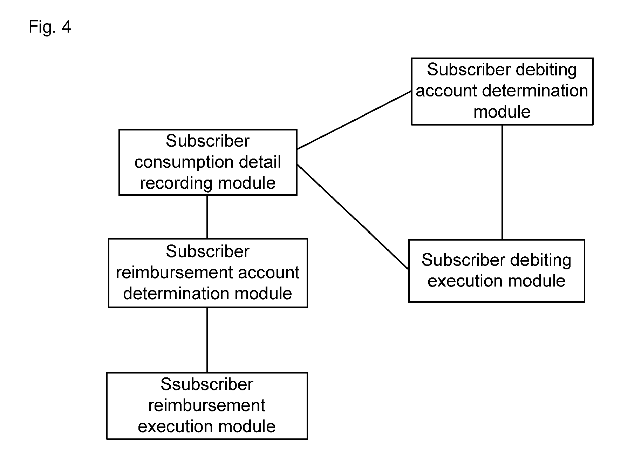

As shown in Fig. 4, a system of the disclosure is composed of the following logic modules:
a subscriber debiting account determination module, mainly configured to determine a specific debiting account according to resources of the subscriber including various packages, gifts, capitals and the like and in combination with consumption detail records of the subscriber;
a subscriber consumption detail recording unit, mainly configured to implement recording of subscriber consumption details, provide data query for a subscriber reimbursement account determination module, and provide data records for a subscriber debiting execution module;
a subscriber debiting execution module, configured to receive the debiting account and amount information of the subscriber from the subscriber debiting account determination module, perform debiting and record a debiting result in the subscriber consumption detail recording module;
a subscriber reimbursement account determination module, configured to query consumption detail records of the subscriber and various resources of the subscriber including a package, a gift, a capital and the like to determine and output reimbursement account information of the subscriber; and
a reimbursement execution module, configured to receive a reimbursement account and reimbursement amount information of a subscriber from the subscriber reimbursement account determination module, and execute a reimbursement operation.

To sum up, in no matter the method or the system, accounts for debiting and reimbursement are determined by recording debiting and rollback details of SMS, EMS, and MMS services by the technology for handling a service of the disclosure, thus avoiding various resource misuse caused by reimbursement. On one hand, relative fairness between the subscriber and the operator is ensured during debiting and reimbursement of the SMS, EMS and MMS services. On the other hand, malicious use of SMS, EMS, and MMS rollback loopholes to acquire illegal benefit is prevented to protect the interest of the operator. Thus, the method and the system possess great economic benefit and technological value.

The above are only preferred embodiments of the disclosure, and are not intended to limit the scope of protection of the disclosure.

## Claims

1. A method for handling a service, comprising creating a detail record list of subscriber consumption for a subscriber service, wherein the method further comprising:
performing debiting in sequence when debiting, and recording debiting detail information; and
querying debiting detail records of a current month and of a previous month when reimbursing to determine a reimbursement account and a reimbursement amount.

2. The method according to claim 1, wherein the subscriber service is at least one of followings: a Short Message Service (SMS), an Enhanced Messaging Service (EMS) and a Multimedia Messaging Service (MMS).

3. The method according to claim 2, wherein the process of creating the detail record list of the subscriber consumption comprises:
for the SMS, the EMS and the MMS of a subscriber, creating following debiting records for the subscriber respectively: a debiting record of a capital account, a debiting record of a gift amount account, a debiting record of a gift number account and a debiting record of a package number account.

4. The method according to claim 2, wherein the process of performing the debiting in sequence and recording the debiting detail information comprises:
for the SMS, the EMS and the MMS of a subscriber, performing the debiting according to a sequence of package number, gift number, gift amount and capital; and accumulating debiting information of all accounts, and recording debiting records capable of reflecting accurate debiting time and debiting account information.

5. The method according to claim 2, wherein the process of querying the debiting detail records of the current month and of the previous month to determine the reimbursement account and the reimbursement amount comprises:
for the SMS, the EMS and the MMS of a subscriber, querying the debiting detail record in debiting records of the current month first, when the debiting detail record is not found, querying the debiting detail record in debiting records of the previous month; for debiting information of the previous month, only allowing reimbursement for capital debiting; when performing reimbursement on the debiting records of the current month, querying a debiting record of a capital account, a debiting record of a gift amount account, a debiting record of a gift number account, and a debiting record of a package number account of the subscriber to determine the reimbursement account and the reimbursement amount of the reimbursement account, and taking debiting amount or debiting number as an upper limit for the reimbursement amount of each account.

6. A system for handling a service, comprising a debiting unit and a reimbursement unit, wherein
the debiting unit is configured to create a detail record list of subscriber consumption for a subscriber service, perform debiting in sequence when debiting, and record debiting detail information; and
the reimbursement unit is configured to query debiting detail records of a current month and of a previous month when reimbursing to determine a reimbursement account number and a reimbursement amount.

7. The system according to claim 6, wherein the subscriber service is at least one of followings: a Short Message Service (SMS), an Enhanced Messaging Service (EMS) and a Multimedia Messaging Service (MMS).

8. The system according to claim 7, wherein the debiting unit comprises a subscriber debiting account determination module, a subscriber consumption detail recording module and a subscriber debiting execution module, wherein
the subscriber debiting account determination unit is configured to determine a specific debiting account according to resources of a subscriber and in combination with consumption detail records of the subscriber;
the subscriber consumption detail recording unit is configured to implement recording of subscriber consumption details, provide data query for a subscriber reimbursement account determination module, and provide data records for the subscriber debiting execution module; and
the subscriber debiting execution module is configured to receive the debiting account and amount information of the subscriber from the subscriber debiting account determination module, perform debiting and record a debiting result in the subscriber consumption detail recording module.

9. The system according to claim 7, wherein the reimbursement unit comprises a subscriber reimbursement account determination module and a reimbursement execution module, wherein
the subscriber reimbursement account determination module is configured to query consumption detail records and resources of the subscriber, and determine and output reimbursement account information of the subscriber; and
the reimbursement execution module is configured to receive a reimbursement account and reimbursement amount information of a subscriber from the subscriber reimbursement account determination module, and execute a reimbursement operation.

10. The system according to claim 8 or 9, wherein the resources comprise various packages, gifts and capitals of the subscriber.
